(19) **Europäisches Patentamt**

**European Patent Office**

**Office européen des brevets**

(11) **EP 0 986 062 A1**

(12) **EUROPEAN PATENT APPLICATION**

(43) Date of publication:
**15.03.2000 Bulletin 2000/11**

(51) Int. Cl.[7]: **G11B 27/32**, G11B 20/12,
G11B 27/10

(21) Application number: **99250179.1**

(22) Date of filing: **08.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.09.1998 EP 98250315**
**04.11.1998 EP 98250387**

(71) Applicant:
**DEUTSCHE THOMSON-BRANDT GMBH**
**78048 Villingen-Schwenningen (DE)**

(72) Inventors:
- **Winter, Marco**
  **30173 Hannover (DE)**
- **Keesen, Werner**
  **30173 Hannover (DE)**
- **Schiller, Harald**
  **30539 Hannover (DE)**

(74) Representative:
**Hartnack, Wolfgang, Dipl.-Ing.**
**Deutsche Thomson-Brandt GmbH**
**European Patent Operations**
**Karl-Wiechert-Allee 74**
**30625 Hannover (DE)**

(54) **Method for addressing a bit stream recording**

(57)    In bitstream recording presentation data is organised into Video Object Units. These have a variable size but have also a variable duration. To allow access to any Video Object Unit in the bitstream a mapping list is used which is based on pieces (SOBU#n) of the bitstream of constant size per piece. The mapping list additionally contains for each of these pieces a specific delta duration (IAPAT#n) which indicates the difference between the arrival time of the first packet of a piece and the arrival time of the packet following immediately the last packet of that piece, and contains an initialisation value (IAPAT#0) which allows to have a share of equal bits between a predetermined amount of MSBs of application time stamps (ATS) and the same amont of LSBs of said delta time durations (IAPAT#n). The computation of the target SOBU address includes the following steps:

- accumulate the initialisation value and the delta durations until the given time value is most closely reached towards the target SOBU;
- the running index of this table entry multiplied by the constant piece size directly results in the address value to be accessed.

Fig.5

## Description

The invention relates to a method and to an apparatus for addressing a bitstream to be recorded or being recorded on a storage medium, e.g. an optical disc.

Background

In bitstream recording one is free to subdivide the bitstream into sub-units of more regular structure. Presentation data in DVDs (digital video or versatile disc) is organised into units called Video Object Unit, denoted VOBU, or Stream Object Unit, denoted SOBU, e.g. in the DVD VR Specification for DVD Video Recording in which the units are called VOBUs. VOBUs have a variable size (data amount measured in number of sectors), but have also a variable duration (measured in number of video fields). SOBUs have a con-stant size, but have also a variable duration. For data retrieval from the disc the DVD VR specification foresees a 'VOBU map' which is a table where for every VOBU in a recording the length in sectors and the duration in fields is entered.

Invention

A table for data retrieval from a storage medium can be based on bitstream data being subdivided into pieces of constant duration. 'Duration' means the difference between the arrival time of the first packet of a piece and the arrival time of the packet following immediately the last packet of that piece.
'Housekeeping' in the general context of either DVD VR recording or Stream recording is the task to translate a given time value (presentation time in case of DVD VR recording or packet arrival time in case of Stream recording) into a disc address value where the desired data can be found.
In such systems the VOBU or SOBU map or 'mapping list', denoted MAPL, can contain a specific size or a specific offset or a specific delta size or, in general, a specific address-like quantity for each of these constant-duration pieces. By storing delta values instead of the total duration at a current VOBU or SOBU these entries can be described with shorter word length which helps to keep the total MAPL in a reasonable size.
A possible type of housekeeping process for these systems could include the following steps:

- By division and truncation, calculate from the given time value the index of the mapping list entry to be looked up.
- The content of the mapping list entry either directly specifies the address value to access, or all mapping list entries up to that index have to be accumulated to get the address value to be accessed.

The big disadvantage of such type of MAPL which is based on constant-duration pieces lies in the following:

- In case of a low bitrate recording the pieces of constant duration will be small in size, i.e. every piece will comprise a few data sectors only or, in the extreme, a fraction of a data sector only. The disc can contain enormous numbers of those pieces, so that the MAPL may become too big to be kept in the memory.
- In case of high bitrate recording, the pieces of constant duration are big in size, i.e. each piece will comprise many data sectors. Then, addressing one piece or another corresponds to a very coarse addressing on the (sector) scale, i.e. a piece address derived from the MAPL can be located many sectors away from the currently desired location.

Therefore housekeeping based on constant-duration pieces can result in a too big MAPL in some cases (up to one half of the disc capacity), and can result in too coarse addressing in other cases.
It is one object of the invention to disclose a method for assigning to a given time value a storage medium address value which method avoids such disadvantages. This object is achieved by the method disclosed in claim 1.
According to the invention the mapping list MAPL is based on pieces of constant length or size, i.e. a constant number of bits per piece.
In a medium like DVD-RAM where data are physically organised into 'ECC blocks' (ECC: error correction code) of 32kByte length each, particular advantages result if the above constant size or a multiple of it is used as the constant size of a piece. However, any other constant size can be used. In this case of pieces of constant size the MAPL contains for each of these pieces of constant size a specific absolute duration or, preferably, a specific delta duration which indicates the arrival time of the first packet of a piece and the arrival time of the packet following immediately the last packet of that piece.
The housekeeping process, i.e. the computation of the target VOBU or SOBU address includes the following steps:

- Accumulate the delta durations contained in the MAPL until the given time value is most closely reached towards the target VOBU or SOBU, i.e. until the sum of delta durations is less than or equal to the given time value as-suming that forward scanning of the VOBU or SOBU entries is performed, or until the sum of delta durations is greater than or equal to the given time value assuming that backward scanning of the VOBU or SOBU entries is performed.

- The running index of this napping list entry multiplied by the constant piece size directly results in the ad-dress value to be accessed.

The advantages of the inventive constant-size based MAPL are:

- the MAPL size does not depend on the bitrate of the recordings,
- the MAPL addressing accuracy is constant, the granularity basically corresponds to the 'piece size constant' which can be chosen as appropriate to be constant for all types of discs, to be constant per disc, or to be constant per recording on a specific disc.

Advantageously, the address table contains an additional initializing value to initialize the accumulation of the delta time durations.

In principle, the inventive method is suited for addressing a bitstream to be recorded or being recorded on a storage medium, e.g. a DVD recorder, wherein an address table is used that is based on pieces of said bitstream, and wherein:

- said pieces each include a constant amount of bits of said bitstream;
- using a running index, to each address table entry for said pieces, in particular to each address table entry except the one having the highest index, a delta time du-ration is assigned in said address table;
- the address table contains in addition an initialisation value which allows to have a share of equal bits between a predetermined amount of MSBs of application time stamps and the same amont of LSBs of said delta time durations;
- in order to get an address value for reaching a target address said initialisation value and all delta time durations up to the nearest time duration corresponding to said address value become accumulated and the running index corresponding to the delta time duration entry re-lated to said nearest time duration becomes multiplied by said constant amount in order to compute said address value.

Advantageous additional embodiments of the inventive method are disclosed in the respective dependent claims.

Drawings

Embodiments of the invention are described with reference to the accompanying drawings, which show in:

Fig. 1  simplified overall system for DVD Stream Recording;
Fig. 2  basic directory and file structure;
Fig. 3  navigation data structure;
Fig. 4  a stream pack;
Fig. 5  inventive mapping list;
Fig. 6  structure of this mapping list;
Fig. 7  mapping list example;
Fig. 8  comparison of several time values;
Fig. 9  IAPAT structure;
Fig. 10  APAT and PAT structure;
Fig. 11  ATS structure.

Exemplary embodiments

The DVD VR stream recording system is designed to use rewritable DVD discs for recording existing digital bitstreams, editing them and playing them back as bitstreams. The following abbreviations are used:

AP: Application Packet, APAT: Application Packet Arrival Time, ATS: Application Timestamp, IAPAT: Incremental APAT (delta values with 12 bit resolution), LB: Logical Block, LSBs: least significant bits, MAPL: Mapping List, MSBs: most significant bits, MTU_SHFT: Mapping Time Unit Shift (an unsigned integer value, e.g. 18), PAT: Packet Arrival Time, RBN: relative byte number, RBP: relative byte position, RLBN: relative logical block number, SCR: system clock reference, SOB: Stream Object, SOBU: Stream Object Unit, SOB_E_APAT: APAT of the last AP of the SOB, SOB_S_APAT: APAT of the first AP of the SOB, SOBU_S_APAT: APAT of the first AP of the SOBU, STB: set top box, SUM_IAPAT = Summation of IAPAT values, TOC: table of content.

This system is designed to satisfy the following requirements:

Any packet size can be supported as long as it is less than 2kByte and of constant length within a take.

A timing mechanism, i.e. a time stamp is added to every broadcast packet to enable proper packet delivery during playback.

To enlarge the fields of applications, non-real-time recording should be possible. However, in this case the STB has to generate the Time Stamp information.

Data allocation strategy and file support real-time stream recording.

Many digital services require Service Information which normally is embedded in the real-time stream. To support a STB fed by data from a DVD player, the DVD should provide additional space, which can be used by the STB to duplicate part of the service information and to add additional TOC information.

Copy Protection must be supported. In addition, any scrambling performed by the service provider or the STB must be kept unchanged.

User requirements can be grouped into requirements for recording, requirements for playback, and requirements for editing:

*Real-time Recording*

The system should be designed to enable real-time recording of digital streams. It also should allow the user to con-catenate recordings, even if those recordings consist of different stream formats. If recordings are concatenated, a seamless or close to seamless playback possibility would be nice but is not required.

*Navigation Support*

To support navigation two pieces of information (lists) should be generated during recording:

1) An 'original' version of a play list. This list contains quite low level information, e.g. time map or (broadcast) packet order of the recording. This list is accessible by the STB and the content is understood by the DVD streamer as well as by the STB. In its original version the playlist enables the playback of a complete recording. The playlist may be accessed and extended after recording by the STB to allow more sophisticated playback sequences.

2) The second piece of information, a mapping list, is generated to support the stream recorder to retrieve packet stream chunks (cells), that are described in terms of the application domain, e.g. 'broadcast packets' or 'time'. This list is owned and understood by the DVD streamer only.

*Content Description*

The system should reserve space which can be used by the STB to store high level TOC and Service Information. This information is provided for the user to navigate through the content stored on disc and may contain sophisticated GUI information. The content needs not to be understood by the stream recorder. However a common subset of the TOC information, e.g. based on a character string, may be useful to be shared between STB and DVD, in order to enable the stream recorder to provide a basic menu by itself.

Playback of individual recording and playing all recordings sequentially should be possible via play list.

*Player menus for entry point selection*

The STB can generate a sophisticated menu based on the TOC information stored on the disc. However, it should be possible to generate a simple menu by the streamer itself, e.g. via some 'character' information which is shared by STB and DVD.

Trick play modes

The STB should be able to steer trick play via the 'play list'. Due to the nature of the broadcast stream, the trick play features may be limited to basic ones, e.g. Time Search and Title Jump.

User defined playback sequence features like programming or parental control can be supported via the play list

The DVD streamer should create the 'original version' of the play list. It also should allow extensions and modifications of the play list by the STB for more sophisticated playback features. The DVD streamer is not responsible for the con-tent of those sophisticated playlist (s).

The system must support the deletion of single recordings on user's request. If possible, the system should allow this feature under the control of the STB.

The system nay support insert editing.

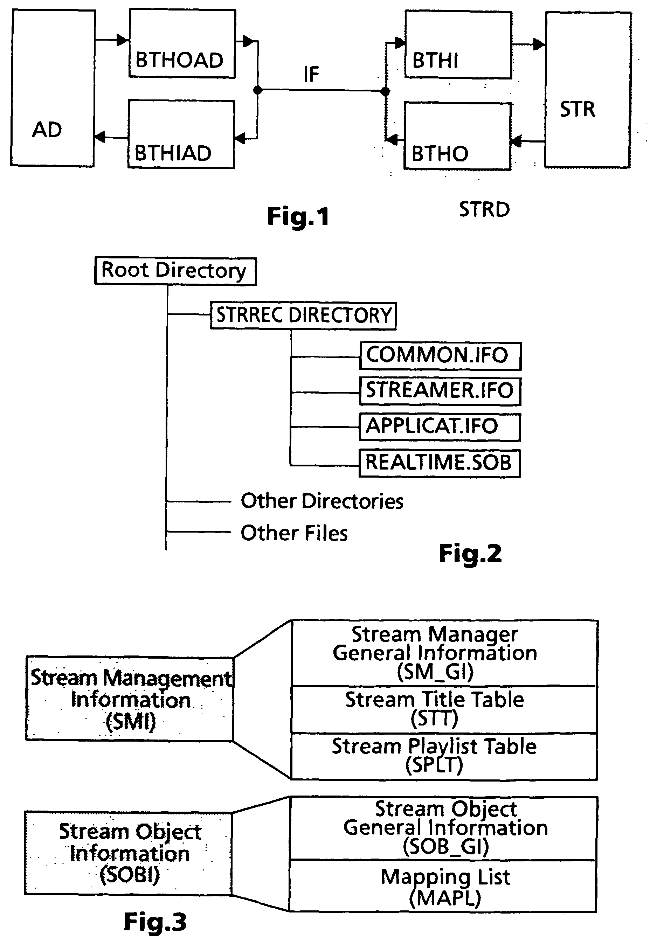

In the simplified overall system of Fig. 1 an application device AD interacts via an interface IF, e.g. an IEEE1394 interface, with a streamer device STRD, i.e. a DVD recorder. A streamer STR within STRD sends its data via output buffering & timestamping handling means BTHO to IF and receives from IF data via input buffering & timestamping handling means BTHI. AD sends its data via output buffering & time-stamping handling means BTHOAD to IF and receives from IF data via input buffering & timestamping handling means BTHIAD.

Concerning the directory and file structure, the organisation of Stream Data and Navigation Data of DVD Stream Recording is done in a specific way such as to take into account the following:

- Any DVD Streamer device STRD has certain requirements to store its own mapping list or Streamer-specific navigation data on the disc. These data are solely for helping the retrieval of recorded data; they need not be understood or even be visible to any outside application de-vice AD.
- Any DVD Streamer device STRD needs to communicate with the application device AD it is connected to. This communication should be as universal as possible so that the maximum possible range of applications can be connected to the Streamer. The Navigation Data to support such communication are called Common navigation data and must be understandable by the Streamer as well as by the application device.
- The Streamer device STRD should offer to the connected application device AD a means for storing its own private data of any desired kind. The Streamer needs not to understand any of the content, internal structure, or meaning of this Application-specific navigation data.

Fig. 2 illustrates a possible directory and file structure where all the data comprising the disc content are. The files storing the disc content are placed under the STRREC directory which is under the root directory. Under the STRREC directory the following files are created:

- COMMON.IFO
  Basic information to describe the stream content. Needs to be understood by the Application Device as well as the Streamer.
- STREAMER.IFO
  Private stream object information specific to the Streamer Device. Needs not to be understood by the Application Device.
- APPLICAT.IFO
  Application Private Data, i.e. information that is specific to the Application(s) connected to the Streamer. Needs not to be understood by the Streamer.
- REALTIME.SOB
  Recorded real-time stream data proper.

Note that except for the files described above, the STRREC directory shall not contain any other files or directories.

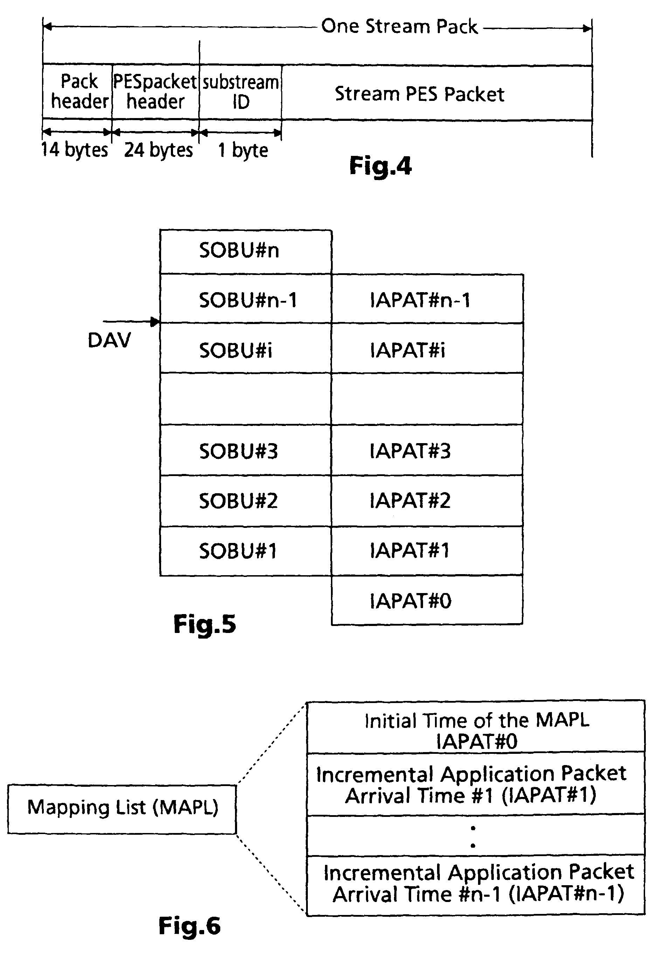

Concerning the navigation data structure, Navigation data is provided to control the recording, playing back, and editing of any bitstreams that are recorded. As shown in Fig. 3, Navigation Data includes Stream Management Information (SMI) as contained in the file named COMMON.IFO and Stream Object Information (SOBI) as contained in the file named STREAMER.IFO. From the point of view of the Streamer Device, these two kinds of information are sufficient to perform all necessary operations.

In addition to these, DVD Stream Recording also foresees the possibility of reserving a storage location for Application Private Data (APD), which may in general also be considered as Navigation Data.

SMI and SOBI are the Navigation Data which are directly relevant for the Streamer operation. SMI includes three kinds of information tables, namely Stream Manager General Information (SM_GI), Stream Title Table (STT), and Stream Playlist Table (SPLT), in this order. SOBI includes two kinds of information tables, namely Stream Object General Information (SOB_GI) and Mapping List (MAPL), in this order. There is no restriction in Stream Recording that each table within Navigation Information must be aligned with a sector boundary.

SM_GI includes information items like end address of SMI, end address of SM_GI, start address of STT and start address of SPLT. STT includes information items like Number of Stream Titles, End Address of Stream Title Table, Application Packet Size, Service ID, Application Device ID, Stream Duration, Stream Name Search Pointer, Stream Title Names (STN).

SPLT includes information items like Number of Playlists, End address of SPLT, Start Addresses of Playlist Information, Number of Playlist Entries, Index of Stream Title, Start SCR, and End SCR.

Stream Object General Information (SOB_GI) includes information items like SOB Type (SOB_TY), SOB Recording Time (SOB_REC_TM), SOB Stream Information Number (SOB_STI_N), Access Unit Data Flags (AUD_FLAGS), SOB Start APAT (SOB_S_APAT), SOB End APAT (SOB_E_APAT), first SOBU of this SOB (SOB_S_SOBU), number of Mapping List entries (MAPL_ENT_Ns).
MAPL_ENT_Ns describes the number of mapping list entries to follow after SOB_GI.

The purpose of the inventive Mapping List MAPL is to provide all necessary information so that given playlist entries are efficiently translated into disc address pairs, and viceversa.

It is also possible to include Application Private Data which consist of three kinds of information, namely Application Private Data General Information, a set of one or more Application Private Data Search Pointers, and a set of one or more Application Private Data Area. If any Application Private Data exists, these three kinds of information become recorded and stored in this order in the APPLICAT.IFO file.

Stream Data include one or more Stream Objects (SOBs) each of which can be stored as a 'Program stream' as described in ISO/IEC 13818-1, Systems. A SOB can be terminated by a program_end_code. The value of the SCR field in the first pack of each SOB may be non-zero. A SOB contains the Stream Data packed into a sequence of 'Stream Packs' (S_PCKs). Stream data can be organised as one elementary stream and are carried in PES packets with a stream_id.

As shown in Fig. 4 a Stream Pack includes a 14-byte pack header and a Stream PES Packet to which a 24-byte PES packet header and a Substream ID byte belongs. A Stream Object is composed of one or more Stream Packs.

The MAPL table depicted in Fig. 5 contains n pieces or SOBUs SOBU#1 to SOBU#n of the bitstream to be recorded or of the recorded bitstream. To SOBU#1 to SOBU#n-1 a corresponding Incremental Application Packet Arrival Time entry IAPAT#1 to IAPAT#n-1 is assigned. DAV denotes a desired address or target address in the bitstream. SOBU#1 to SOBU#n each concern a constant number of bits of the bitstream.

As shown in Fig. 6, the Mapping List includes the Initial Time of the MAPL IAPAT#0 and zero or more instances of "Incremental Application Packet Arrival Time" (IAPAT).

|  | Contents | Number of Bytes |
|---|---|---|
| (1) IAPAT | Incremental APAT | 2 |
|  | Total | 2 |

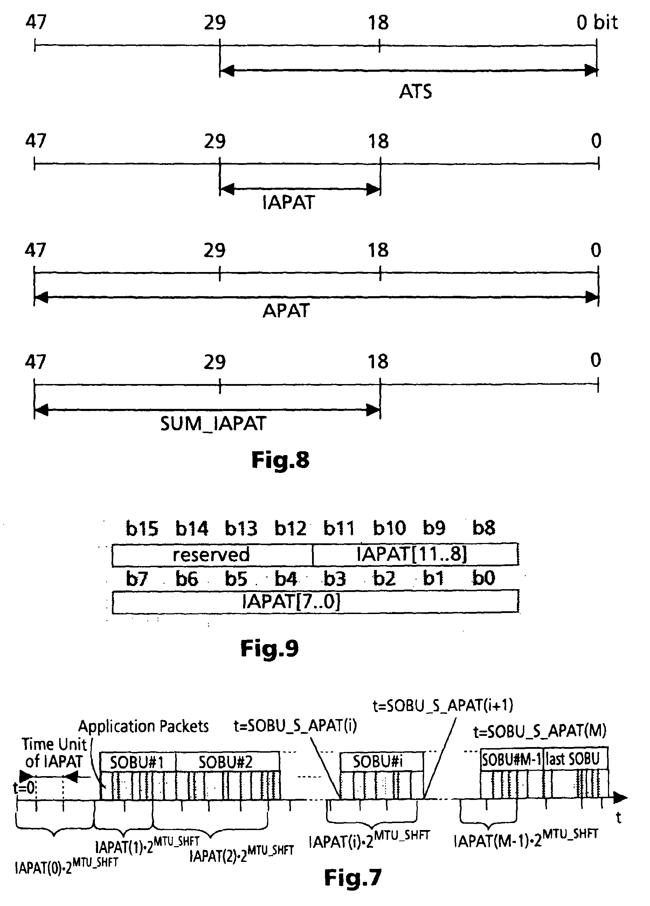

The structure of the IAPAT value is depicted in Fig. 9. IAPAT describes the Incremental Application Packet Arrival Time of the corresponding Stream Object Unit in DVD Stream Recording's Incremental PAT Describing Format defined below.

For an explanation on how to calculate IAPAT(i) during re-cording, the following notations will be used:

- For abbreviation, M shall denote the number of Mapping List entries MAPL_ENT_Ns.
- SOBU_S_APAT(i) $(1 \le i \le M)$ shall denote the start Application Packet Arrival Time of the Stream Object Unit #i of the Stream Object, i.e. the packet arrival time of the first packet belonging to the Stream Object Unit #i. SOBU_S_APAT(1) shall be equal to the Application Time Stamp of the first Application Packet of Stream Object Unit #1 of the Stream Object.
- IAPAT(0) shall denote the initial value for the Mapping List.
- IAPAT(i) shall denote the i-th entry of the Mapping List, i.e. IAPAT(0) is the first and IAPAT(M-1) is the last entry of the Mapping List.
- SUM_IAPAT(i) shall denote the summation of the IAPATs from 0 to i (i < M)

$$SUM\_IAPAT(i) = IAPAT(0) + IAPAT(1) + ... + IAPAT(i) \text{ with } SUM\_IAPAT(-1) = 0 . \qquad \text{(eq 1)}$$

Then IAPAT(i) shall be chosen such that

$$IAPAT(i) = floor(SOBU\_S\_APAT(i+1)/2^{MTU\_SHIFT}) - SUM\_IAPAT(i-1) \qquad \text{(eq 2)}$$

for i = 1,2,..., M-1 .

The IAPAT value range is limited by the resolution (12 bit) of an IAPAT value and its minimum value (IAPAT(i) = 1 for I>0 and IAPAT(0) = 0):

$$0 \leq IAPAT(0) < 2^{12} \qquad (eq\ 3)$$

and

$$1 \leq IAPAT(i) < 2^{12} \text{ for } i > 1 \qquad (eq\ 4)$$

The floor function floor(x) rounds down, e.g. floor(1.2) = floor(1.8) = 1, floor(-1.2) = floor(-1.8) = -2. SOBU_S_APAT(i) is described in the DVD Stream Recording PAT Describing Format. But, in evaluating the equations above they must be treated as if they were 6 byte unsigned integer values. Fig. 7 shows, along the time axis, an example of the order of SOBU, SOBU_S_APAT and IAPAT. The left side of the time axis is divided into 'Mapping Time Units' and the right side of the time axis shows the SOBUs.
Mapping Time Unit is a duration corresponding to IAPAT = 1, and can be calculated as

$$\text{Mapping Time Unit} = (2^{MTU\text{-}SHIFT} / 90000) \text{ seconds} \qquad (eq\ 5)$$

For MTU_SHFT = 18 it corresponds to approx. 5.69 milliseconds.
SOB_S_APAT describes the start Application Packet Arrival Time of a Stream Object, i.e. the packet arrival time of the first packet belonging to the SOB. SOB_S_APAT is described below in the DVD Stream Recording PAT Describing Format: PATs consist of a base part and an extension part. The base part holds the so-called 90kHz unit value, and the extension part holds the less significant value measured in 27MHz units.

(a) Choosing SOB_S_APAT for a new recording
A newly recorded SOB will normally start with the first Application Packet of a SOBU. In this case, SOB_S_APAT and the Application Timestamp of the first Application Packet of the SOB will normally be set to 0.
(b) Calculation of SOB_S_APAT after editing
After editing, e.g. deleting the start of a SOB, SOB_S_APAT, the Application Timestamp of the first Application Packet of the first SOBU of the SOB and the Application Timestamp of the first Application Packet belonging to the SOB may differ and may be not equal to 0.

All possible cases are covered by the following general definition of SOB_S_APAT:

•   let $ats_e$ be the 30-bit Application Timestamp of the first Application Packet belonging to the SOB and
•   let N be the number of all Application Timestamp wrap-arounds occuring between the 30-bit Application Timestamp of the first Application Packet starting in the first SOBU of the SOB and $ats_e$ , i.e. $0 \leq N \leq 1$, then

SOB_S_APAT[MTU_SHFT + 11...0] = $ats_e$[MTU_SHFT + 11...0]
SOB_S_APAT[48...MTU_SHFT + 12] = N

With this definition of SOB_S_APAT, the APAT of the first Application Packet starting in the first SOBU of the SOB is equal to or greater than 0 and less than 2 MTU_SHIFT+12 .

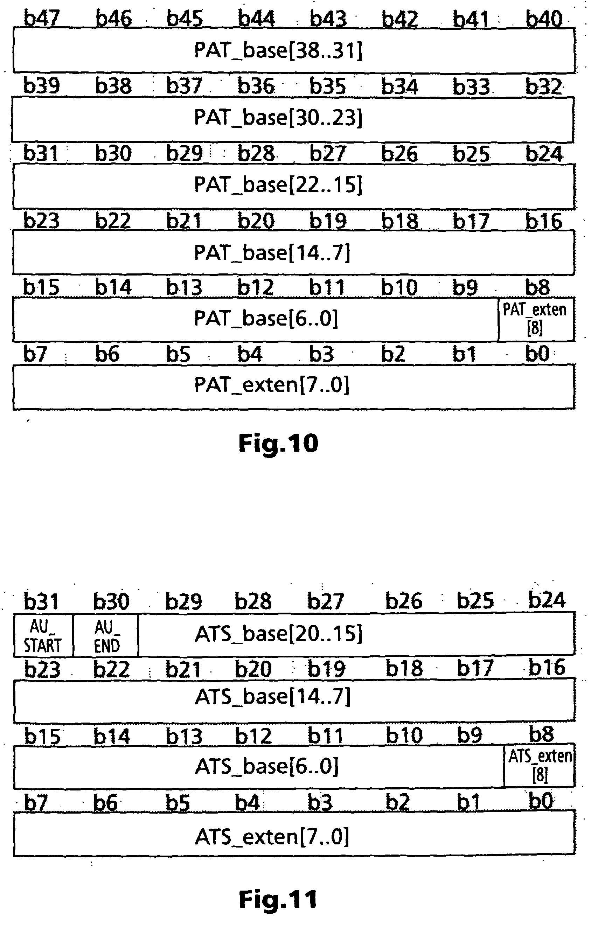

Fig. 10 shows the DVD Stream Recording PAT Describing Format. The variables in this figure are defined as follows:

PAT_base:    PAT's base value measured by 90kHz unit
PAT_exten:   PAT's extension value measured by 27MHz unit ($0 \leq$ PAT_exten < 300)

$$\text{PAT in seconds} = (\text{PAT\_base}/90000Hz) + (\text{PAT\_exten}/27000000Hz)$$

For an unique representation of times, PAT_exten must be in the range of $0 \leq$ PAT_exten < 300. Together, PAT_base and PAT_exten cover a range of more than 1696 hours.
SOB_E_APAT describes the end Application Packet Arrival Time of the Stream Object, i.e. the packet arrival time of the last packet belonging to the SOB, in the DVD Stream Recording PAT Describing Format. The general definition of SOB_E_APAT is as follows:

- let $ats_e$ be the 30-bit Application Timestamp of the last Application Packet belonging to the SOB and
- let N be the number of all Application Timestamp wrap-arounds occuring between the 30-bit Application Timestamp of the first Application Packet starting in the first SOBU of the SOB and $ats_e$ , i.e. N ≤ 0, then

SOB_E_APAT[MTU_SHFT + 11...0] = $ats_e$[MTU_SHFT + 11...0]
SOB_E_APAT[48...MTU_SHFT + 12] = N

The Application Time Stamp (ATS) in front of each Application packet consists of a 30-bit value. An ATS includes a base part and an extension part. The base part holds the so-called 90kHz unit value, and the extension part holds the less significant value measured in 27MHz units. Fig. 11 depicts the DVD Stream Recording Application Time Stamp Describing Format. The variables in this figure are defined as follows:

AU_START   when set to '1', indicates that the associated Application Packet contains a random access entry point (start of a random access unit) into the stream
AU_END   when set to '1', indicates the associated Application Packet is the last packet of a random access unit
ATS_base   base value of ATS measured in 90kHz units
ATS_exten   extension value of ATS measured in 27MHz units

ATS in seconds = (ATS_base/90000Hz) + (ATS_exten/27000000Hz)

For a unique representation of times, ATS_exten must be in the range of 0 ≤ ATS_exten < 300. Together, ATS_base and ATS_exten cover a range of more than 23 seconds.
Fig. 8 depicts the value ranges of ATS, IAPAT and SUM_IAPAT with respect to the 48-bit range of APAT. ATS covers bits 0 to 29. IAPAT covers bits 18 to 29. SUM_IAPAT covers bits 18 to 47.
A significant advantage of the invention is that the mapping list generates timestamps SUM_IAPAT of which the 12 LSB bits No. 18 to 29 are identical to the 12 MSB bits No. 18 to 29 of the stream timestamps ATS. This feature allows to simplify the real-time recorder hardware.

*Example function for scanning the Presentation Data until the desired Application Packet is found*

The following function describes how to scan Presentation Data in order to retrieve an individual application packet associated with a Packet Arrival Time 'x'. Thereby the Map-ping List and the access to it is described in more detail, e.g. internal intermediate values which are required in subsequent steps, see Fig. 5, 6 and 7. The main result of Mapping List access is the Sector offset SOFF, indicating where the scanning starts. The complete scanning will be carried out inside a given SOB.
Notes on nomenclature used:

- x48 is a 6-byte APAT value which is indicated below by '48'.
- The value '30' attached to other variables indicates that they consist of 30 bits, e.g. Application Time Stamp ATS.
- IAPAT(0), IAPAT(1),... denote the entries of the Mapping List.
- The form var[a...b] denotes the bit field between and in-cluding bits a and b of the variable var.
- '[i ... K]' denotes bits i to K of a binary number, i = MSB, k = LSB .
- '/*...*/' denotes explanatory comments.

In order to simplify the example it is assumed that each sector contains an integer number of at least one application packet (s).
Function get_application_packet_location(x48)

a) sum_iapat48 = IAPAT(0) *$2^{MTU\_SHIFT}$; k = 1
b) ss48 = IAPAT(k)*$2^{MTU\_SHIFT}$
c) if (sum_iapat48 + ss48) [47...18] ≥ x48[47...18], then go to g)
d) sum_iapat48 = sum_iapat48 + ss48
e) k = k + 1
f) if k < MAPL_ENT_Ns, then go to b)
g) soff = (k-1)*SOBU_SZ /* sector offset of SOBU#(k) relative to the 1st SOBU of the SOB */
h) offset48[47...30] = sum_iapat48[47...30]

i) offset48[29...0] = 0

j) current_ats30 = 0;

k) ap_no = 1 /* Number of AP within Sector, $1 \leq ap\_no \leq AP\_Ns$ */

l) previous_ats30 = current_ats30

m) current_ats30 = (ATS of the application packet #ap_no of sector #soff)

n) if previous_ats30 is greater than current_ats30, then offset48 = offset48 + $2^{30}$ /*handle ATS wrap around */

o) it current_ats30 + offset48 = x48 then go to s) /* target found! */

p) if sector #soff contains at least one more application packet start, then ap_no = ap_no + 1 go to m)

q) soff = soff + 1

r) go to K)

The desired application packet is now retrieved as packet #ap_no of sector #soff. A value of ap_no = 1 denotes the first Application Packet starting in the Sector. A value of soff = 0 denotes the first Sector of the first SOBU of the SOB.

The above function is a more general example. It can be sin-lified if MTU_SHFT < 19. This requirement is fulfilled because MTU_SHFT is defined as 18.

a) sum_iapat30 = IAPAT(0); k = 1

b) sum_iapat30 = sum_iapat30 + IAPAT(k)

c) if sum_iapat30 $\geq$ x48[47...18], then go to f)

d) k = k + 1

e) if k < MAPL_ENT_Ns, then go to b)

f) soff = (k-1)*SOBU_SZ /* sector offset of SOBU #(k) relative to the 1st SOBU of the SOB */

g) ap_no = 1 /* number of AP within Sector, $1 \leq ap\_no \leq AP\_PKT\_Ns$ */

h) if (ATS of the application packet #ap_no of sector #soff) equal to x48[29...0], then go to 1) /* target found! */

i) if sector #soff contains at least one more application packet start, then ap_no = ap_no + 1 go to h)

j) soff = soff + 1

k) go to g)

The desired application packet is now retrieved as packet #ap_no of sector #soff. A value of ap_no = 1 denotes the first Application Packet starting in the Sector. A value of soff = 0 denotes the first Sector of the first SOBU of the SOB.

The 30 bits of ATS have the same weight as the 30 LSBs of APAT.

It is not required that the first sector of the first SOBU of a SOB belongs to this SOB. If the first part of a SOB was erased, then the remaining SOB may start in the middle of a SOBU, i.e. the first sector of this SOBU is not part of the SOB.

In Stream recording, the application performs its own padding, so that the pack length adjustment methods of DVD-ROM Video or DVD-VR need not to be used. In Stream recording it is safe to assume, that the Stream packets will always have the necessary length.

The data stream also contains application time stamps ATS, e.g. within the data packets.

**Claims**

**1.** Method for addressing a bitstream to be recorded or being recorded on a storage medium (STRD), wherein an address table (MAPL) is used that is based on pieces (SOBU#n) of said bitstream, **characterised** by:

- said pieces (SOBU#n) each include a constant amount of bits of said bitstream;
- using a running index (0, 1, 2, 3, ..., n-1), to each ad-dress table entry for said pieces, in particular to each address table entry except the one having the highest index, a delta time duration (IAPAT#n) is assigned in said address table;
- the address table contains in addition an initialisation value (IAPAT#0) which allows to have a share of equal bits between a predetermined amount of MSBs of application time stamps (ATS) and the same amont of LSBs of said delta time durations (IAPAT#n);
- in order to get an address value for reaching a target address (DAV) said initialisation value (IAPAT#0) and all delta time durations (IAPAT#1, ... IAPAT#n-1) up to the nearest time duration value corresponding to said address value become accumulated, and the running index (i) corresponding to the delta time duration entry ($\triangle$DUR#i) related to said nearest time duration value becomes multiplied by said constant amount in order to compute said address value.

2.  Method according to claim 1, wherein said storage medium (STRD) is a Streamer device or a DVD recorder.

3.  Method according to claim 1 or 2, wherein said pieces (SOBU#n) of said bitstream contain data packets and a delta time duration value which is the difference between the arrival time of the first packet of a piece and the arrival time of the packet following immediately the last packet of that piece.

4.  Method according to any of claims 1 to 3, wherein the size of a piece corresponds to the number of bits of an ECC block or a multiple thereof.

5.  Method according to any of claims 1 to 4, wherein said initialisation value corresponds to some, in particular 12, MSBs of the application time stamp (ATS) of the first application packet of the first piece (SOBU) which is described by said address table (MAPL).

6.  Method according to any of claims 1 to 5, wherein said address table is a mapping list (MAPL).

**Fig.1**

STRD

**Fig.2**

**Fig.3**

One Stream Pack

| Pack header | PESpacket header | substream ID | Stream PES Packet |
|---|---|---|---|

14 bytes  24 bytes  1 byte

**Fig.4**

| | |
|---|---|
| SOBU#n | |
| SOBU#n-1 | IAPAT#n-1 |
| SOBU#i | IAPAT#i |
| | |
| SOBU#3 | IAPAT#3 |
| SOBU#2 | IAPAT#2 |
| SOBU#1 | IAPAT#1 |
| | IAPAT#0 |

DAV

**Fig.5**

| Mapping List (MAPL) |
|---|

| Initial Time of the MAPL IAPAT#0 |
|---|
| Incremental Application Packet Arrival Time #1 (IAPAT#1) |
| . . . |
| Incremental Application Packet Arrival Time #n-1 (IAPAT#n-1) |

**Fig.6**

47            29            18            0 bit

$\longleftarrow$ ATS $\longrightarrow$

47            29            18            0

$\longleftarrow$ IAPAT $\longrightarrow$

47            29            18            0

$\longleftarrow$ APAT $\longrightarrow$

47            29            18            0

$\longleftarrow$ SUM_IAPAT $\longrightarrow$

**Fig.8**

| b15 | b14 | b13 | b12 | b11 | b10 | b9 | b8 |
|-----|-----|-----|-----|-----|-----|-----|-----|
| reserved | | | | IAPAT[11..8] | | | |
| b7 | b6 | b5 | b4 | b3 | b2 | b1 | b0 |
| IAPAT[7..0] | | | | | | | |

**Fig.9**

t=SOBU_S_APAT(i+1)

t=SOBU_S_APAT(i)

t=SOBU_S_APAT(M)

Application Packets

Time Unit
of IAPAT

t=0

| SOBU#1 | SOBU#2 | ... | SOBU#i | ... | SOBU#M-1 | last SOBU |

$IAPAT(0) \cdot 2^{MTU\_SHFT}$

$IAPAT(1) \cdot 2^{MTU\_SHFT}$

$IAPAT(2) \cdot 2^{MTU\_SHFT}$

$IAPAT(i) \cdot 2^{MTU\_SHFT}$

$IAPAT(M-1) \cdot 2^{MTU\_SHFT}$

t

**Fig.7**

| b47 | b46 | b45 | b44 | b43 | b42 | b41 | b40 |
|---|---|---|---|---|---|---|---|
| PAT_base[38..31] | | | | | | | |

| b39 | b38 | b37 | b36 | b35 | b34 | b33 | b32 |
|---|---|---|---|---|---|---|---|
| PAT_base[30..23] | | | | | | | |

| b31 | b30 | b29 | b28 | b27 | b26 | b25 | b24 |
|---|---|---|---|---|---|---|---|
| PAT_base[22..15] | | | | | | | |

| b23 | b22 | b21 | b20 | b19 | b18 | b17 | b16 |
|---|---|---|---|---|---|---|---|
| PAT_base[14..7] | | | | | | | |

| b15 | b14 | b13 | b12 | b11 | b10 | b9 | b8 |
|---|---|---|---|---|---|---|---|
| PAT_base[6..0] | | | | | | | PAT_exten [8] |

| b7 | b6 | b5 | b4 | b3 | b2 | b1 | b0 |
|---|---|---|---|---|---|---|---|
| PAT_exten[7..0] | | | | | | | |

**Fig.10**

| b31 | b30 | b29 | b28 | b27 | b26 | b25 | b24 |
|---|---|---|---|---|---|---|---|
| AU_ START | AU_ END | ATS_base[20..15] | | | | | |

| b23 | b22 | b21 | b20 | b19 | b18 | b17 | b16 |
|---|---|---|---|---|---|---|---|
| ATS_base[14..7] | | | | | | | |

| b15 | b14 | b13 | b12 | b11 | b10 | b9 | b8 |
|---|---|---|---|---|---|---|---|
| ATS_base[6..0] | | | | | | | ATS_exten [8] |

| b7 | b6 | b5 | b4 | b3 | b2 | b1 | b0 |
|---|---|---|---|---|---|---|---|
| ATS_exten[7..0] | | | | | | | |

**Fig.11**

## EUROPEAN SEARCH REPORT

**European Patent Office**

**Application Number**

EP 99 25 0179

### DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| A | EP 0 797 204 A (PIONEER ELECTRONIC CORP) 24 September 1997 (1997-09-24) * page 2, line 28 - page 3, line 4; page 12, line 25-42; page 18, line 31-49; figure 5 * | 1,2,4 | G11B27/32 G11B20/12 G11B27/10 |
| A | FR 2 759 471 A (SONY CORP) 14 August 1998 (1998-08-14) * page 11, line 22 - page 12, line 25; page 21, line 21 - page 25, line 12 * | 1,2,4 | |
| A | EP 0 729 153 A (HITACHI LTD) 28 August 1996 (1996-08-28) * column 3, line 45 - column 4, line 13; figure 2 * | 1,2 | |
| A | EP 0 673 034 A (SONY CORP) 20 September 1995 (1995-09-20) * page 25, line 13 - page 28, line 4; figures 34-40 * | 1,2 | |
| A | US 5 630 005 A (ORT JEFFREY) 13 May 1997 (1997-05-13) * claim 1 * | 1,2 | TECHNICAL FIELDS SEARCHED<br>G11B |

The present search report has been drawn up for all claims

| Place of search | Date of completion of the search | Examiner |
|---|---|---|
| THE HAGUE | 23 August 1999 | Mourik, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**ANNEX TO THE EUROPEAN SEARCH REPORT
ON EUROPEAN PATENT APPLICATION NO.**                    EP 99 25 0179

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-1999

| Patent document cited in search report | | Publication date | Patent family member(s) | | Publication date |
|---|---|---|---|---|---|
| EP 0797204 | A | 24-09-1997 | JP | 9251763 A | 22-09-1997 |
| FR 2759471 | A | 14-08-1998 | JP | 10222316 A | 21-08-1998 |
| EP 0729153 | A | 28-08-1996 | JP | 8235833 A | 13-09-1996 |
| | | | CN | 1135072 A | 06-11-1996 |
| | | | EP | 0930618 A | 21-07-1999 |
| EP 0673034 | A | 20-09-1995 | AU | 681259 B | 21-08-1997 |
| | | | AU | 1824595 A | 18-09-1995 |
| | | | BR | 9505853 A | 21-02-1996 |
| | | | CA | 2160913 A | 08-09-1995 |
| | | | CN | 1115076 A | 17-01-1996 |
| | | | CN | 1124062 A | 05-06-1996 |
| | | | EP | 0696799 A | 14-02-1996 |
| | | | JP | 7311950 A | 28-11-1995 |
| | | | WO | 9524037 A | 08-09-1995 |
| | | | PL | 311310 A | 05-02-1996 |
| | | | SG | 24104 A | 10-02-1996 |
| | | | US | 5734787 A | 31-03-1998 |
| | | | US | 5592450 A | 07-01-1997 |
| | | | US | 5596565 A | 21-01-1997 |
| | | | US | 5745505 A | 28-04-1998 |
| US 5630005 | A | 13-05-1997 | NONE | | |

EPO FORM P0459

For more details about this annex : see Official Journal of the European Patent Office, No. 12/82